# EUROPÄISCHE PATENTSCHRIFT

(11) **EP 0 331 181 B1**
(45) Veröffentlichungstag und Bekanntmachung des Hinweises auf die Patenterteilung: **29.09.1993**
(21) Anmeldenummer: 89103732.7
(22) Anmeldetag: 03.03.1989
(51) Int. Cl.: B29C 51/42, B29C 49/64

(54) **Verfahren zum Umformen von Tafeln und Rohren aus Kunststoff**
Method of reshaping plastics boards or tubes
Procédé pour le formage de plaques ou de tubes en matière plastique

(30) Priorität: 04.03.1988 DE 3807040
(43) Veröffentlichungstag der Anmeldung: 06.09.1989
(73) Patentinhaber: Röhm GmbH, 64293 Darmstadt (DE)
(72) Erfinder: Hanstein, Friedrich, D-6112 Gross-Zimmern (DE); Fehring, Karl-Heinz, D-6081 Stockstadt/Rh (DE)

(56) Entgegenhaltungen:
- DE-B- 2 924 788
- GB-A- 1 496 881
- US-H- 671

## Beschreibung

Die Erfindung betrifft ein Verfahren zum Umformen von Tafeln oder Rohren aus Kunststoff im thermoelastischen Zustand mittels eines erhitzten Formwerkzeugs mit hoher Wärmeleitfähigkeit. Im thermoelastischen Zustand lassen sich Tafeln und Rohre aus Kunststoff in vielfältiger Weise durch Biegen, Strecken, Wölben oder Blasen umformen; durch Abkühlung unter die Erweichungstemperatur wird die durch Umformen erzielte Gestalt bleibend "eingefroren".

### Stand der Technik

Die Arbeitsweise bei technischen Umformverfahren ist im Band IX des Kunststoffhandbuches, "Polymethacrylate" von R. Vieweg und F. Esser (MÜnchen, 1975), auf den Seiten 550 bis 573 ausführlich dargestellt. Umformwerkzeuge können beim Umformen durch Blasen, Saugen oder Strecken angewendet werden. Sie können aus Holz gearbeitet sein und sind zur Vermeidung von Abdrücken auf dem umgeformtem Kunststoff mit sog. Handschuhstoff überzogen (vgl.S. 550). Die geringe Wärmeleitfähigkeit des Holzes gilt als Vorteil dieses Werkstoffes (S.550). Für große Serienfertigungen werden Werkzeuge aus Metall bevorzugt, die zur Verbesserung der Oberflächenbeschaffenheit und zur Wärmeisolierung mit hitzebeständigen Lacken oder Gießharzen überzogen werden (S. 551, 564). Durch Hochglanzpolitur der Metalloberfläche wird nicht etwa der Oberflächenglanz des Kunststoffes während des Umformens bewahrt, sondern eher Pickelbildung hervorgerufen. Günstiger ist eine seidenmatte Oberfläche (S. 551).

Es ist bekannt, die Oberfläche von Metallwerkzeugen durch Einbau von Heizelementen zu erwärmen (S. 551). Beispielsweise werden Werkzeuge für die Blas- und Saugumforung von Acrylglas auf 60 bis 80 Grad C erwärmt, um ein Abschrecken des Materials zu vermeiden (S. 564). Beim Strecken von Acrylglas mittels Ziehstempeln empfiehlt es sich, Stempel aus einem gut wärmeleitenden Werkstoff herzustellen und auf möglichst hohe Temperaturen, etwa 80 bis 110 Grad C, aufzuheizen (S. 566), um eine vorzeitige Abkühlung des Kunststoffes zu vermeiden. Durch die Anwendung eines relativ warmen Werkzeugs lassen sich Kälteschlieren zwar weitgehend, aber nicht vollständig ausschließen (S. 567). Angewärmte Metallwerkzeuge helfen auch, Spannungen in dem Formteil durch ungleichmäßige Abkühlung zu vermeiden (S. 568).

Bei allen bekannten Umformverfahren, auch bei Anwendung erwärmter Werkzeuge, wird das umgeformte Teil grundsätzlich erst entformt, wenn es insgesamt unter die Erweichungstemperatur abgekühlt ist. Die Erfahrung beweist, daß trotz aller erwähnten Vorsichtsmaßnahmen Abdrücke des Formwerkzeugs auf der Oberfläche des Kunststoffes unvermeidlich sind. Namentlich hochglänzende Oberflächen, wie sie für Acrylglastafeln charakteristisch sind, werden auch durch geringfügige Abdrücke empfindlich gestört und wirken unansehnlich. Ähnliches gilt für fein mattierte Flächen.

Um diese Schwierigkeiten zu vermeiden, werden gemäß DE-A 35 16 467 bzw. EP-A 201 044 beim Umformen von thermoelastisch erweichten Kunststofftafeln zur Erhaltung des Glanzes Formwerkzeuge mit einem starren Körper verwendet, die mit einer elastischen Schicht mit einer glatten, geschlossenen, mattierten Oberfläche von einer höheren Elastizität als der der erweichten Kunststofftafel belegt sind. Die zwischen den Oberflächen des Werkzeuges und des Kunststoffes wirksamen Kräfte verursachen in diesem Falle eher eine Verformung der Werkzeugoberfläche als der des Kunststoffes. Die Herstellung solcher Werkzeuge gestaltet sich jedoch schwierig, wenn es sphärisch gewölbte Flächen aufweist.

### Aufgabe und Lösung

Der Erfindung liegt die Aufgabe zugrunde, beim Umformen von Tafeln oder Rohren aus Kunststoff im thermoelastischen Zustand mittels eines erhitzten Formwerkzeugs mit hoher Wärmeleitfähigkeit die Bildung von Abdrücken des Formwerkzeugs noch weiter zu vermindern oder vollständig zu vermeiden.

Es wurde gefunden, daß dieses Ziel erreicht wird, wenn das Formwerkzeug bei einer Temperatur im thermoelastischen Zustandsbereich des Kunststoffes verwendet wird und der umgeformte Kunststoff an der Rückseite unter die Erweichungstemperatur gekühlt wird, bis er formbeständig ist, und von dem heißen Formwerkzeug entformt wird, solange dieses eine Temperatur in dem genannten Bereich hat.

Während die bekannten Verfahren darauf abzielen, den Wärmeaustausch zwischen dem thermoelastisch erweichten Kunststoff und dem Formwerkzeug durch eine wärmeisolierende Werkzeugoberfläche und durch geringe Temperaturunterschiede zwischen Kunststoff und Werkzeug zu unterdrücken, beruht das Verfahren der Erfindung gerade auf einem guten Wärmeaustausch.

Die Erfindung beruht darauf, die an dem Formwerkzeug anliegende Oberfläche des Kunststoffes bis zum Augenblick der Entformung im thermoelastischen Zustand zu halten, so daß sich alle Verformungen der Kunststoffoberfläche durch elastische Rückstellung sofort aufheben, wenn das Werkstück von der Werkzeugoberfläche gelöst wird. In der Wandung des umgeformten Kunststoffkörpers besteht zum Zeitpunkt der Entformung ein scharfer Temperaturgradient. Während die nicht an dem erhitzten Werkzeug anliegende Rückseite des Kunststoffkörpers bis zu einer ausreichenden Tiefe unter die Erweichungstemperatur abgekühlt ist, so daß der Formkörper den elastischen Rückstellkräften des Materials nicht mehr nachgibt, also formbeständig ist, nimmt die Temperatur in Richtung auf die am heißen Werkzeug anliegende Oberfläche bis zu einem Wert im thermoelastischen Zustandsbereich zu.

Der Temperaturgradient kann auf einen Tiefenbereich nahe an der am Werkzeug anliegenden Kunststoffoberfläche beschränkt sein. Da sich die Oberflächenstörungen beim Werkzeugkontakt auf einen nur wenige Mikrometer dicken Grenzbereich beschränken, genügt es, daß dieser Bereich bis zur Entformung im thermoelastischen Zustand gehalten wird. Schon wenige Mikrometer von der Grenzfläche entfernt kann das Material unterhalb der Erweichungstemperatur liegen. Das ist im Interesse der Formstabilität und der Vermeidung innerer Spannungen sogar von Vorteil und bei der Verarbeitung dünner Tafeln von Folienstärke unerläßlich.

Der erforderliche scharfe Temperaturgradient kommt zustande, wenn der umgeformte Kunststoff an der Rückseite wirksam gekühlt wird, während der Wärmeverlust an der am Werkzeug anliegenden Oberfläche durch die von dem Werkzeug nachgelieferte Wärme ständig ausgeglichen wird. Das setzt eine hohe Wärmeleitfähigkeit des Werkzeugmaterials voraus, denn sonst bestünde die Gefahr, daß die Werkzeugoberfläche und die daran anliegende Kunststoffoberfläche stellenweise unter die Erweichungstemperatur des Kunststoffes abkühlen. Dadurch würden die Oberflächenstörungen eingefroren und der erfindungsgemäße Effekt ginge verloren.

Der thermoelastische Zustand der Kunststoffoberfläche ist demnach eine wesentliche Voraussetzung für das Verfahren der Erfindung. Der thermoelastische Zustandsbereich ist ein Stoffmerkmal des verwendeten Kunststoffes. Kennzeichnend für diesen Zustand ist das elastisch-reversible Verhalten des Kunststoffes gegenüber verformenden Kräften. Bei Aufhebung der verformenden Kraft nimmt der Kunststoff wieder die ursprüngliche Gestalt an, die er vor Einwirkung der Kraft besaß; vgl. Vieweg-Esser, loc.cit. S.88-97 und 541. Beim Verfahren der Erfindung wird daher die Kunststoffoberfläche durch Unebenheiten der Werkzeugoberfläche, durch Staubteilchen oder Gasblasen nur reversibel verformt und kehrt beim Entformen elastisch in den ursprünglichen ebenen Zustand zurück.

Zur Durchführung des Verfahrens muß daher der Temperaturbereich des thermoelastischen Zustands für den verarbeiteten Kunststoff genau bekannt sein. Er läßt sich durch Aufstellung eines Spannungs-Dehnungs-Diagramms in bekannter Weise ermitteln. Er beginnt bei der Erweichungstemperatur und geht bei vielen Kunststoffen bei steigender Temperatur in einem mehr oder weniger breiten Temperaturintervall in den thermoplastischen Zustand über. Dieser ist dadurch gekennzeichnet, daß Formänderungen unter der Einwirkung verformender Kräfte irreversibel sind, d.h. der Kunststoff behält die veränderte Gestalt auch dann bei, wenn die verformende Kraft nachläßt oder verschwindet. Im Übergangsbereich zwischen dem thermoelastischen und dem thermoplastischen Zustand sind Formänderungen nur teilweise elastisch reversibel. Der Kunststoff beginnt zu fließen, und zwar umso stärker, je näher die Temperatur am reinen thermoplastischen Zustand liegt, je stärker die Verformung ist und je länger sie einwirkt.

Das Verfahren der Erfindung kann in der Regel noch erfolgreich ausgeführt werden, solange der Kunststoff an der Berührungsfläche mit dem Werkzeug wenigstens teilweise elastisches Verhalten zeigt. Es ist jedoch mit Oberflächenstörungen zu rechnen, wenn die Werkzeugoberfläche starke Unebenheiten aufweist oder die Berührungsdauer zwischen Kunststoff und Werkzeug lang ist.

Die Kunststofftafeln und -rohre die erfindungsgemäß verarbeitet werden, müssen einen thermoelastischen Zustandsbereich aufweisen. Das ist nicht bei allen Kunststoffen der Fall; beispielsweise werden hochvernetzte Duroplaste beim Erwärmen nicht thermoelastisch. Hochkristalline Kunststoffe, wie einige Polyamide oder Polyoxymethylene, haben oft einen so schmalen Temperaturbereich zwischen der Erweichungs- und der Schmelztemperatur, daß sie nur bedingt für die thermoelastische Verarbeitung in Betracht kommen und jedenfalls eine sehr genaue Temperaturführung erfordern würden. Die Mehrzahl der technisch gebräuchlichen Kunststoffe, z.B. die meisten als "Thermoplaste" bezeichneten Kunststoffe, sind nach dem Verfahren der Erfindung verarbeitbar. Besonders geeignet sind Kunststoffe mit einem breiten thermoelastischen Zustandsbereich; dazu gehören schwach vernetzte Kunststoffe und unvernetzte Kunststoffe mit einem Molekulargewicht über 500.000 bis zu mehreren Millionen (Gewichtsmittelwert). Diese Kunststoffe weisen zum Teil gar keinen thermoplastischen Zustandsbereich oberhalb des elastischen Bereichs auf und gehen bei weiterem Erhitzen unmittelbar in den Zersetzungsbereich über.

Die Lage des thermoelastischen Zustandsbereichs ist nicht kritisch, da sich die Verfahrensbedingungen weitgehend anpassen lassen. Typische Kunststoffe für das Verfahren der Erfindung sind bei Temperaturen im Bereich zwischen 80 und 250 Grad C thermoelastisch. Dazu gehören vor allem gegossenes Acrylglas, d.h. Polymethylmethacrylat und Mischpolymerisate des Methylmethacrylats mit einem Molekulargewicht über 500.000, die beispielsweise Acrylester oder Acrylnitril als Comonomere enthalten, ferner extrudiertes Acrylglas, das sich von dem gegossenen durch ein Molekulargewicht unter 500.000 (Gew.-Mittel) unterscheidet, Celluloseester-Kunststoffe, wie Celluloseacetat, -acetobutyrat, -propionat oder -nitrat, Polyvinylchlorid, Polystyrol, Polyolefine und verträgliche Mischungen verschiedener Polymerer.

Tafelförmiges Acrylglas kann durch Gießen in Schichtdicken zwischen 1 und 30 mm hergestellt sein, während die anderen Kunststoffe überwiegend durch Kalandrieren oder Extrudieren zu Tafeln oder Rohren verarbeitet werden. Die Wandstärken können von 0,1 mm bei Folienbahnen und -schläuchen bis zu etwa 10 mm bei extrudierten Platten oder Rohren reichen. Bevorzugt sind Dicken von 0,5 bis 8 mm. Die Rohrdurchmesser liegen in der Regel bei 20 bis 1000 mm. Wenn mehrschichtig aufgebaute Kunststoffe verarbeitet werden, hängt die Anwendbarkeit des Verfahrens davon ab, daß wenigstens die am Werkzeug anliegende Schicht aus einem Kunststoff mit einem thermoelastischen Zustandsbereich besteht und die für die mechanischen Eigenschaften bestimmende Schicht einer Umformung im thermoelastischen Zustand zugänglich ist.

Bevorzugt werden Kunststofftafeln oder -rohre mit wenigstens einer hochglänzenden Oberfläche verarbeitet. Auch bei gleichförmig mattierten oder seidenmatten Oberflächen wirkt sich das Verfahren vorteilhaft aus. Die Kunststoffe können klar durchsichtig und farblos oder transparent oder deckend eingefärbt sein.

Das Formwerkzeug besteht aus einem gut wärmeleitenden Werkstoff. Seine Wärmeleitfähigkeit soll wenigstens eine Größenordnung höher als die des Kunststoffes sein und mehr als 2 W/cm*K, vorzugsweise 10 bis 250 W/cm*K, betragen. Metalle, wie Aluminium, Kupfer oder Stahl, sind am besten geeignet. Brauchbar sind auch hoch metallgefüllte Pressmassen. Nichtmetallische Werstoffe, wie Graphit oder Marmor sind bedingt, Glas und Keramik in der Regel nicht geeignet.

Die Wärmekapazität des Formwerkzeugs muß ausreichen, um genügend Wärme an die Oberfläche des Kunststoffes zu leiten, damit dieser im thermoelastischen Zustand bleibt, während er auf der Rückseite gekühlt wird. Die Dicke des Formwerkzeugs sollte zweckmäßigerweise wenigstens das 2-bis 10-fache der Kunststoffdicke betragen. Ist die Wärmekapazität des Werkzeugs nicht ausreichend, so kann die erforderliche Wärme auch von einer Wärmequelle, wie einer eingebauten elektrischen Widerstandsheizung oder einem von einem Heizmittel durchströmten Kanal, geliefert werden.

Das Werkzeug kann mittels einer solchen Wärmequelle auf die erforderliche Betriebstemperatur aufgeheizt werden. Es kann jedoch auch in einem Wärmeschrank, gegebenenfalls zusammen mit dem umzuformenden Kunststoff, vorgewärmt werden.

Da sich die Oberfläche des Werkzeugs auf dem Kunststoff nicht abprägt, ist seine Oberflächenbeschaffenheit im allgemeinen nicht kritisch. Eine polierte Oberfläche kann die Entformung erschweren. Eine rauhe, gratige Oberfläche kann die Kunststoffoberfläche mechanisch beschädigen. Am vorteilhaftesten ist die Oberfläche fein bis grob geschliffen, wobei die Schleifriefen zur Ableitung der Luft beim Anlegen des Kunststoffes nützlich sein können, wenn sie in Richtung auf den Rand verlaufen.

### Das Umformverfahren

Die Gestalt des Formwerkzeugs richtet sich in bekannter Weise nach der herzustellenden Kunststoffgestalt, dem Umformverfahren und der Entformungsmöglichkeit. Vorzugsweise wird der Kunststoff durch einen einseitigen Gasüberdruck an das Formwerkzeug angelegt. Der Anpreßdruck ist beim Vakuumformen auf 1 kp/qcm beschränkt und kann beim Blasformen deutlich darüber hinaus gehen, beispielsweise bis auf 10 kp/qcm. Wird zum Umformen ein Ziehstempel benutzt, der gegebenenfalls nur als Formhilfswerkzeug beim Vakuum- oder Blasumformen dient, so kann dieser ebenfalls vorgewärmt werden, wenn er keine Abdrücke hinterlassen soll.

Wird der Kunststoff mechanisch zwischen einem Positiv- und einem Negativ-Werkzeug umgeformt, die beidseitig an dem Kunststoff anliegen, so muß wenigstens eines der Werkzeuge kühlbar sein und hinterläßt dann zwangsläufig die bekannten Oberflächenstörungen. Man wird in diesem Falle das Formwerkzeug zur Bildung der wesentlichen Sichtseite im Sinne der Erfindung ausbilden.

Vorzugsweise wird das Verfahren der Vakuumformung angewendet. Es gestattet in idealer Weise die Kühlung der freiliegenden Rückseite durch freie Wärmeabstrahlung oder vorzugsweise durch Aufblasen von kalter Luft. Dagegen muß beim Blasumformen die Blasluft selbst unter dem erforderlichen Blasdruck durch kalte Luft ersetzt werden.

Die Abkühlung des geformten Teils kann beginnen, sobald die Umformung durch Anlage des Kunststoffes am Formwerkzeug beendet ist. Sie muß fortgesetzt werden, bis eine genügend dicke Schicht des Kunststoffes unter die Erweichungstemperatur abgekühlt ist, um bei der Entformung der elastischen Rückstellkraft der noch im thermoelastischen Zustand verbliebenen Schicht zu widerstehen. Die Abkühlung muß jedenfalls abgebrochen werden, bevor die Wärmekapazität des Formwerkzeugs erschöpft ist und die Formoberfläche unter die Erweichungstemperatur des Kunststoffes abkühlt. Gegossenes Acrylglas wird auf der Rückseite mindestens auf etwa 80 bis 100 Grad C, extrudiertes Acrylglas mindestens auf 70 bis 90 Grad C abgekühlt. Im allgemeinen bereitet es keine Schwierigkeit, die Abkühlung zu einem geeigneten Zeitpunkt zwischen den zwei erwähnten Zuständen zu beenden.

Unmittelbar nach Abschluß der Abkühlung wird entformt. Die Glättung der vom Werkzeug entformten Kunststoffoberfläche erfolgt spontan bei der Ablösung, so daß diese Seite des Formteil sofort nach dem Entformen gekühlt werden kann.

## Patentansprüche

1. Verfahren zum Umformen von Tafeln oder Rohren aus Kunststoff im thermoelastischen Zustand mittels eines erhitzten Formwerkzeugs mit hoher Wärmeleitfähigkeit,
dadurch gekennzeichnet,
daß das Formwerkzeug bei einer Temperatur im thermoelastischen Zustandsbereich des Kunststoffes verwendet wird und daß der umgeformte Kunststoff an der Rückseite unter die Erweichungstemperatur gekühlt wird, bis er formbeständig ist, und von dem heißen Formwerkzeug entformt wird, während dieses eine Temperatur in dem genannten Bereich hat.

2. Verfahren nach Anspruch 1, dadurch gekennzeichnet, daß ein Formwerkzeug aus Metall verwendet wird.

3. Verfahren nach Anspruch 1 oder 2, dadurch gekennzeichnet, daß die Tafel oder das Rohr im thermoelastischen Zustand durch einseitigen Gasüberdruck an das Formwerkzeug angelegt wird.

4. Verfahren nach einem oder mehreren der Ansprüche 1 bis 3, dadurch gekennzeichnet, daß eine Tafel oder ein Rohr mit hochglänzender Oberfläche umgeformt wird.

5. Verfahren nach einem oder mehreren der Ansprüche 1 bis 4, dadurch gekennzeichnet, daß eine Tafel oder ein Rohr aus Acrylglas umgeformt wird.

## Claims

1. A process for reforming plastics plates or tubes in the thermoelastic state by means of a heated moulding tool with high thermal conductivity, characterised in that the moulding tool is used at a temperature within the range of the thermoelastic state of the plastics, and that the reformed plastics material is cooled below the softening temperature on the back until it is dimensionally stable, and is removed from the hot moulding tool whilst said tool has a temperature within the range mentioned.

2. A process according to claim 1, characterised in that a moulding tool made of metal is used.

3. A process according to claim 1 or 2, characterised in that the plate or tube in the thermoelastic state is placed against the moulded tool using excess gas pressure on one side.

4. A process according to one or more of claims 1 to 3, characterised in that a plate or tube with a highly polished surface is reformed.

5. A process according to one or more of claims 1 to 4, characterised in that a plate or tube made of acrylic glass is reformed.

## Revendications

1. Procédé pour la déformation de panneaux ou de tubes en matière plastique à l'état thermoélastique, au moyen d'un outil de formage chauffé qui a une conductibilité thermique élevée, caractérisé en ce que l'outil de formage est utilisé à une température se situant dans la gamme de l'état thermoélastique de la matière plastique, et en ce que la matière plastique déformée est refroidie sur le côté arrière au-dessous de la température de ramollissement, jusqu'à ce qu'elle soit dimensionnellement stable, et elle est extraite de l'outil de formage chaud pendant que celui-ci est à une température dans la gamme susmentionnée.

2. Procédé selon la revendication 1, caractérisé en ce qu'on utilise un outil de formage en métal.

3. Procédé selon la revendication 1 ou 2, caractérisé en ce que le panneau ou le tube à l'état thermoélastique est appliqué sur l'outil de formage par une surpression unilatérale de gaz.

4. Procédé selon l'une quelconque des revendications 1 à 3, caractérisé en ce qu'un panneau ou un tube à surface de poli spéculaire est déformé.

5. Procédé selon l'une quelconque des revendications 1 à 4, caractérisé en ce qu'un panneau ou un tube en verre acrylique est déformé.
